# EUROPÄISCHE PATENTSCHRIFT

(11) **EP 1 024 574 B1**
(45) Veröffentlichungstag und Bekanntmachung des Hinweises auf die Patenterteilung: **22.03.2006**
(21) Anmeldenummer: 00100965.3
(22) Anmeldetag: 19.01.2000
(51) Int. Cl.: H02H 9/00

(54) **Verfahren zum Zuschalten eines Transformators an ein Wechselspannungsnetz und Schaltungsanordnung zur Durchführung des Verfahrens**
Method for connecting a transformer to an alternating voltage supply and circuit for implementing this method
Procédé pour connecter un transformateur au réseau de tension alternative ainsi qu'un circuit pour la mise en oeuvre de ce procédé

(30) Priorität: 27.01.1999 DE 19903131
(43) Veröffentlichungstag der Anmeldung: 02.08.2000
(73) Patentinhaber: DaimlerChrysler AG, 70567 Stuttgart (DE)
(72) Erfinder: Still, Ludwig, 64683 Einhausen (DE)
(74) Vertreter: Broydé, Marc

(56) Entgegenhaltungen:
- DE-C- 4 309 484
- DE-C- 19 734 272
- GAMMERT R.: 'DIE ELEKTRISCHE AUSRUESTUNG DER DREHSTROMLOKOMOTIVE BAUREIHE 120 DER DEUTSCHEN BUNDESBAHN' ELEKTRISCHE BAHNEN Bd. 77, Nr. 10, 1979, OLDENBOURG R., MUNCHEN, DE, Seiten 272 - 283, XP008049235

## Beschreibung

Die Erfindung bezieht sich auf ein Verfahren und eine Anordnung zum Zuschalten eines Transformators an ein Wechselspannungsnetz, wobei mindestens eine Primärwicklung des Transformators über einen Leistungsschalter mit dem Wechselspannungsnetz verbunden und ein für Vierquadrantenbetrieb geeigneter Pulsstromrichter an mindestens eine Sekundärwicklung des Transformators angeschlossen werden kann sowie auf eine Schaltungsanordnung zur Durchführung des Verfahrens. Die Erfindung ist insbesondere für Bahnanwendungen (elektrische Schienenfahrzeuge) geeignet.

Bei allgemein bekannten Grundschaltungen für Bahnanwendungen - siehe beispielsweise R. Gammert, Die elektrische Ausrüstung der Drehstromlokomotive Baureihe 120 der Deutschen Bundesbahn, Elektrische Bahnen 77 (1979), Heft 10, Seite 272 - 283 - wird ein Mittelspannungstransformator über einen mechanisch arbeitenden Mittelspannungsleistungsschalter an ein speisendes Netz geschaltet. Der Transformator hat mehrere Sekundärwicklungen, an denen selbstgeführte Stromrichter mit eingeprägter Spannung arbeiten. Die Grundschaltungen für einphasige und mehrphasige Netzanwendungen unterscheiden sich lediglich durch die Anzahl von Primärwicklungen, Sekundärwicklungen und Stromrichterphasen.

Die Einschaltung der vorstehend beschriebenen Schaltungsanordnung mit Transformator an das speisende Wechselspannungsnetz erfolgt über den Leistungsschalter nicht netzsynchron. Ein Nachteil dieses nicht-synchronen Einschaltens ist der durch den Einschalt-Rush des Transformators bedingte hohe Einschaltstromstoß, welcher zu erhöhtem Verschleiß im Leistungsschalter führt. Ein weiterer Nachteil ist der durch die einseitige Sättigung verursachte, sehr langsam abklingende Gleichstromanteil. Da einige Bahngesellschaften Gleichstrom-Gleisfteimeldeeinrichtungen benutzen, existieren hohe Anforderungen hinsichtlich eines maximal zulässigen Gleichstromanteils während einer definierten Zeitspanne. Zur Einhaltung dieser Anforderungen sind spezielle Transformatorauslegungen erforderlich, die das Gewicht erhöhen und den Wirkungsgrad verschlechtern.

Das definierte Einschalten von mechanischen Schaltgeräten innerhalb eines Netzperiodenzeitpunktes scheitert an der Streuung der Schaltzeiten der Schaltgeräte, die durch die Umgebungstemperatur, Alterung und Typenstreuung in großem Ausmaß bestimmt werden. Weiterhin sind durch die nicht bekannte Remanenzlage des Transformators zusätzliche Ungenauigkeiten gegeben, welche die Möglichkeit eines netzsynchronen . Einschaltens erschweren.

Der Einbau von Halbleiterschaltern zwischen Netz und Transformator zum definierten Einschalten ist bei hohen Spannungen und Leistungen wegen der erheblichen Mehraufwendungen und Kosten unwirtschaftlich.

Der Erfindung liegt die Aufgabe zugrunde, ein Verfahren zum Zuschalten eines Transformators an ein Wechselspannungsnetz anzugeben, das einen Einschalt-Rush vermeidet oder zumindest seine Wirkung begrenzt. Des weiteren soll eine Schaltungsanordnung zur Durchführung des Verfahrens angegeben werden.

Diese Aufgabe wird hinsichtlich des Verfahrens in Verbindung mit den Merkmalen des Anspruchs 1 dadurch gelöst, daß mittels des Pulsstromrichters unter Zuhilfenahme von Systemgrößen, wie Netzspannung, Netzstrom und Pulsstromrichtereingangsstrom, eine geregelte oder gesteuerte netzsynchrone Transformatormagnetisierung durchgeführt wird.

Die Aufgabe wird hinsichtlich der Schaltungsanordnung zur Durchführung des Verfahrens alternativ durch die in den Ansprüchen 7 oder 8 gekennzeichneten Merkmale gelöst.

Die mit der Erfindung erzielbaren Vorteile bestehen insbesondere darin, daß unter Einsatz des Pulsstromrichters und über einfache Schaltungsmodifikation der allgemein bekannten Grundschaltungen sowie spezielle Steuerungsverfahren eine aufwandsarme Möglichkeit geschaffen wird, mit der je nach gewähltem Verfahren ein Einschalt-Rush des Transformators völlig vermieden oder durch gezielte Beeinflussung zumindest gedämpft wird. Da die Magnetisierung des Transformators von der Stromrichterseite aus netzspannungsabhängig in Betrag und Phase vorgenommen wird, erfolgt die Verbindung von Transformator zum Netz ohne größeren Ausgleichsvorgang. Noch auftretende Gleichglieder im Strom werden während der nächsten Netzhalbschwingungen ausgeregelt.

Hierdurch wird der Verschleiß der Schaltgeräte vorteilhaft vermindert. Es ist eine gewichstssparende Auslegung des Transformators möglich, was Wirkungsgradvorteile und Kostenvorteile hat.

Vorteilhafte Ausgestaltungen der Erfindung sind in den Unteransprüchen gekennzeichnet.

Weitere Vorteile der Erfindung ergeben sich aus der nachstehenden Beschreibung.

Die Erfindung wird nachstehend an Hand der in der Zeichnung dargestellten Ausführungsbeispiele näher erläutert. Es zeigen:
- Fig. 1: eine an ein einphasiges Wechselspannungsnetz angeschlossene Stromrichteranordnung,
- Fig. 2: eine an ein dreiphasiges Wechselspannungsnetz angeschlossene Stromrichteranordnung.

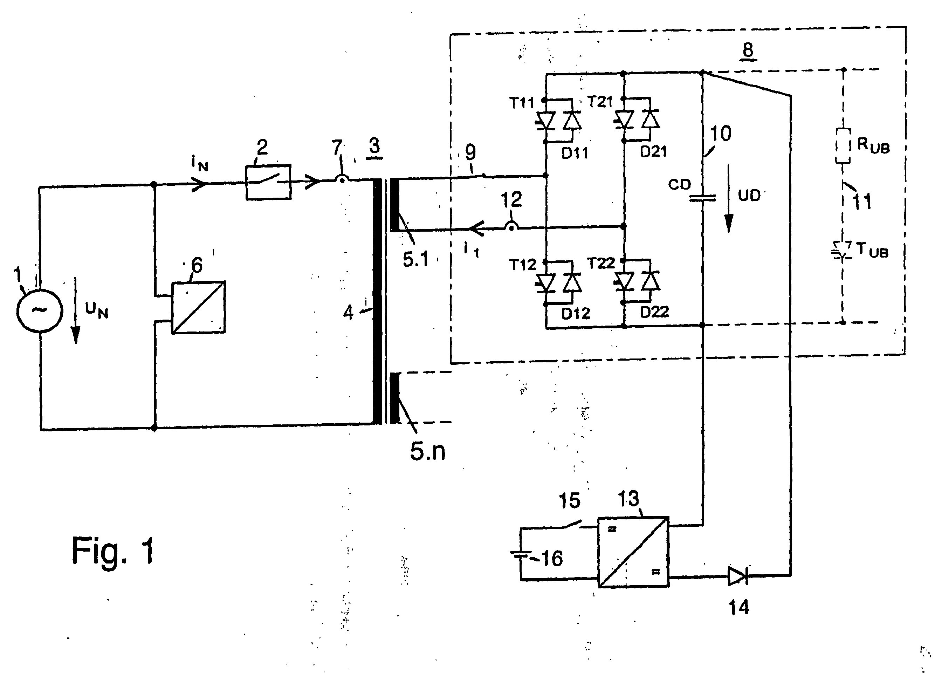

In Fig. 1 ist eine an ein einphasiges Wechselspannungsnetz angeschlossene Stromrichteranordnung dargestellt, wie sie üblicherweise bei elektrischen Schienenfahrzeugen (einphasige Bahnanwendungen) eingesetzt wird. Es ist ein einphasiges Wechselspannungsnetz 1 zu erkennen, das über einen Leistungsschalter 2 mit einer Primärwicklung 4 eines Transformators 3 verbunden ist. Der Transformator 3 besitzt in allgemein bekannter Art und Weise mehrere Sekundärwicklungen, wovon eine erste Sekundärwicklung 5.1 sowie eine n-te Sekundärwicklung 5.n bezeichnet sind. Weitere vorhandene Sekundärwicklungen sind aus Gründen der Übersichtlichkeit nicht dargestellt. Ein primärseitiger Spannungswandler 6 erfaßt die Netzspannung U_{N}. Ein zwischen Leistungsschalter 2 und Primärwicklung 4 angeordneter Stromwandler 7 erfaßt den Netzstrom i_{N}.

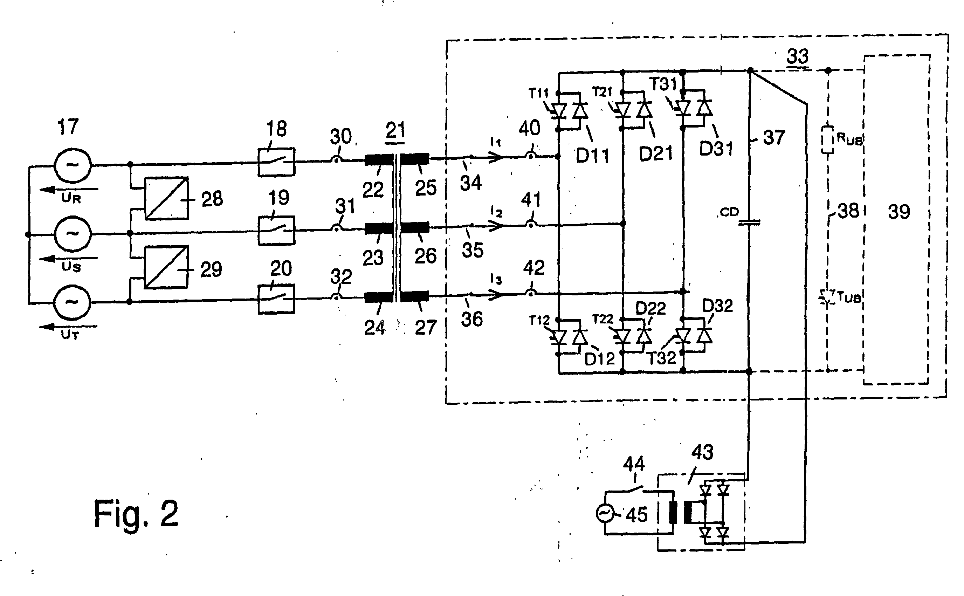

Mit der Sekundärwicklung 5.1 des Transformators 3 sind die Wechselanschlüsse eines selbstgeführten Pulsstromrichters 8 verbunden, wobei vorzugsweise ein Schalter 9 zur Ein/Ausschaltung des Pulsstromrichters 8 zwischengeschaltet ist. Der Pulsstromrichter 8 kann einen Energieaustausch in allen vier Quadranten durchführen und besitzt in allgemein bekannter Art und Weise vier in Brückenschaltung angeordnete Zweige mit jeweils einem zünd- und löschbarem Hauptventil T11 bzw. T21 bzw. T12 bzw. T22, wobei jedem Hauptventil eine Rückleistungsdiode D11 bzw. D21 bzw. D12 bzw. D22 antiparallel liegt. Die Gleichanschlüsse der Brückenschaltung sind in ebenfalls allgemeiner bekannter Art und Weise mit einem Zwischenkreis 10 mit Zwischenkreiskondensator CD sowie gegebenenfalls mit einem Überspannungsbegrenzungszweig 11 mit Widerstand R_{UB} und seriellem steuerbarem Ventil T_{UB} beschaltet. Alternativ zum steuerbarem Ventil T_{UB} kann auch ein Spannungsvaristor vorgesehen sein. Die Zwischenkreisspannung ist mit U_{D} bezeichnet. An den Zwischenkreis 10 ist üblicherweise ein nicht dargestellter Wechselrichter (siehe Ziffer 39 in Fig. 2) angeschlossen, welcher zur Speisung mindestens eines Antriebsmotors eines Schienenfahrzeuges dient.

Die zur Funktion des Pulsstromrichters 8 erforderlichen Glättungsinduktivitäten sind nicht separat dargestellt, da diese oftmals im Transformator 3 selbst in Form einer erhöhten Streuung integriert sind.

Zur Erfassung des zwischen Sekundärwicklung 5.1 und den Wechselanschlüssen des Pulsstromrichters 8 fließenden Pulsstromrichtereingangsstromes i₁ dient ein Stromwandler 12.

Für die Aufladung des Zwischenkreises 10 ist eine Vorladeeinrichtung 13-im Ausführungsbeispiel nach Fig. 1 ein DC/DC-Wandler - vorgesehen, welche ausgangsseitig über eine Entkopplungsdiode 14 (Schutz vor Rückspeisung) mit dem Zwischenkreis 10 und eingangsseitig über einen Schalter 15 mit einer Gleichspannungsquelle 16, vorzugsweise einer Batterie, verbunden ist. Alternativ hierzu kann auch die in Fig. 2 gezeigte, aus einem Anpaßtransformator mit nachgeschalteter Diodenbrücke bestehende Vorladeeinrichtung 43 eingesetzt werden. Diese Vorladeeinrichtung 43 ist eingangsseitig über einen Schalter 44 aus einer Wechselspannungsquelle 45 versorgbar.

In Fig. 2 ist eine an ein dreiphasiges Wechselspannungsnetz angeschlossene Stromrichteranordnung dargestellt. Das dreiphasige Wechselspannungsnetz 17 mit den Netzspannungen U_{R}, U_{S}, U_{T} ist über drei Leistungsschalter 18,19,20 mit drei in Stern geschalteten Primärwicklungen 22, 23, 24 eines Transformators 21 verbindbar. Zwei Spannungswandler 28, 29 dienen zur Erfassung der interessierenden Spannungen. Die in den Phasen fließenden Ströme werden durch drei Stromwandler 30, 31, 32 erfaßt.

Drei ebenfalls in Stern geschaltete Sekundärwicklungen 25, 26, 27 des Transformators sind über Schalter 34, 35, 36 in allgemein bekannter Art und Weise mit einem selbstgeführten Pulsstromrichter 33 mit sechs in Brückenschaltung angeordneten Zweigen mit jeweils einem zünd- und löschbarem Hauptventil T11 bzw. T21 bzw. T31 bzw. T12 bzw. T22 bzw. T32 verbindbar, wobei jedem Hauptventil eine Rückleistungsdiode D11 bzw. D21 bzw. bzw. D31 bzw. D12 bzw. D22 bzw. D32 antiparallel liegt. Drei Stromwandler 40, 41, 42 dienen zur Erfassung der Pulsstromrichtereingangsströme i₁, i₂, i₃. Der Pulsstromrichter 33 kann einen Energieaustausch in allen vier Quadranten durchführen. Der Zwischenkreis des Pulsstromrichters 33 mit Zwischenkreiskondensator CD ist mit Ziffer 37 und der Überspannungsbegrenzungszweig mit den unter Fig. 1 erläuterten Baukomponenten R_{UB} und T_{UB} ist mit Ziffer 38 bezeichnet. Es ist angedeutet, daß die Gleichanschlüsse des Pulsstromrichters 33 mit einem Wechselrichter 39 verbunden sind.

Die nachfolgende Beschreibung der Funktionsweise erfolgt beispielhaft für die Schaltung nach Fig. 1, ist jedoch sinngemäß auch für die Schaltung nach Fig. 2 gültig.

Das Einschalten des Transformators 3 an das Wechselspannungsnetz 1 kann nach drei unterschiedlichen, erfindungsgemäßen Verfahren vorgenommen werden. Beim ersten Verfahren wird ein Rush-Ausgleich steuerungstechmsch vollständig vermieden. Beim zweiten und dritten Verfahren entsteht zwar ein Einschalt-Rush, jedoch werden auftretende Gleichglieder im Netzstrom i_{N} durch gezielte sekundärseitige Beeinflussung unter Zuhilfenahme des Pulsstromrichters definiert schnell abgebaut.

Der Steuerungsablauf gemäß dem ersten Verfahren wird nach folgenden Schritten vorgenommen:

In einem ersten Schritt erfolgt die Vorladung des Zwischenkreises 10. Spätestens nach der Einschaltanforderung des Leistungsschalters 2 wird hierzu die Vorladeeinrichtung 13 respektive 43 eingeschaltet. Die Vorladeeinrichtung 13 respektive 43 lädt den Zwischenkreis 10 auf eine Zwischenkreisspannung U_{D} auf, welche über dem Scheitelwert der Netzspannung U_{N} liegt.

In einem zweiten Schritt erfolgt nach beendeter Vorladung und dem Einlegen des Schalters 9 die Stromrichterfreigabe zur Transformatormagnetisierung. An die Sekundärwicklung 5.1 werden durch den periodisch taktenden Pulsstromrichter 8 pulsbreitenmodulierte Zwischenkreisspannungsblöcke geschaltet. Die Pulsbreitenmodulation wird in Abhängigkeit der Netzspannung U_{N} (netzsynchron, netzspannungsgeführt) nach einem allgemein bekannten Vergleichsverfahren vorgenommen. Der Magnetisierungsstromverlauf, d. h. der Verlauf des Pulsstromrichtereingangsstromes i₁, wird über den Stromwandler 12 gemessen und die Breite der Zwischenkreisspannungsblöcke während der positiven und negativen Netzspannungs-Halbwelle wird durch Stromregelung derart gezielt beeinflußt, daß auftretende Gleichglieder (Gleichstromanteile) ausgeregelt werden.

Bei Transformatoren mit nur geringer Remanenz erfolgt die Taktfreigabe des Pulsstrumrichters 8 vorzugsweise 90° vor oder nach dem Nulldurchgang der Netzspannung U_{N}. Bei Transformatoren mit hoher Remanenz erfolgt die Taktfreigabe des Pulsstromrichters 8 zweckmäßig unmittelbar nach dem Nulldurchgang der Netzspannung U_{N}, um innerhalb einer Halbperiode der Netzspannung U_{N} eine definierte Induktion zu erreichen.

Der beginnende Sättigungszustand wird entweder durch die Überschreitung einer Stromschwelle (Pulsstromrichtereingangsstrom i₁) erkannt oder alternativ durch die progressive Änderung der Steilheit des Magnetisierungsstromverlaufes (di₁/dt) detektiert. Bei Erreichung eines definierten Zustandes wird der Stromwert (Pulsstromrichtereingangsstrom i₁) durch unveränderten Fluß so lange gehalten, bis die Netzspannung U_{N} den nächsten Nulldurchgang erreicht. Hiernach wird die an die Sekundärwicklung 5.1 gelegte gepulste Spannung analog des Verlaufes der Netzspannung U_{N} moduliert.

Nach wenigen Halbschwingungen der Netzspannung U_{N} zur Ausregelung eventuell aufgetretener Gleichglieder (Gleichstromanteile) ist der eingeschwungene Zustand erreicht und es kann in einem dritten Schritt die Einschaltfreigabe für den Leistungsschalter 2 erfolgen, wodurch der Leistungsschalter 2 nach seiner Eigenzeit den Transformator 3 zum Wechselspannungsnetz 1 durchschaltet.

Da die Magnetisierung von der Sekundärseite des Transformators 3 in Betrag und Phasenlage netzsynchron erfolgt, tritt beim Schließen des Leistungsschalters 2 kein vergrößerter Ausgleichsvorgang auf. Eventuell auftretende Gleichglieder (Gleichstromanteile) lassen sich durch die arbeitende sekundärseitige Stromrichtertaktung innerhalb weniger Halbwellen der Netzspannung U_{N} abbauen.

In einem vierten Schritt wird der Pulsstromrichter nach erfolgter Netzverbindung zweckmäßig bis zur Freigabe für seine eigentliche Hauptaufgabe gesperrt, um nicht unnötige Verluste zu erzeugen.

Der Steuerungsablauf gemäß dem zweiten Verfahren wird nach folgenden Schritten vorgenommen:

In einem ersten Schritt erfolgt die Vorladung des Zwischenkreises 10. Dies erfolgt analog der für das erste Verfahren erläuterten Weise.

Nach erfolgter Vorladung des Zwischenkreises 10 bleibt der Pulsstromrichter 8 zunächst noch gesperrt. Der Schalter 9 ist eingelegt und in einem zweiten Schritt erfolgt die Einschaltfreigabe des Leistungsschalters 2. Nach Schließen der Schalterkontakte des Leistungsschalters 2 tritt je nach Schaltaugenblick ein unterschiedlicher Ausgleichsvorgang auf. Unmittelbar nach Erkennung des Einschaltvorganges des Leistungsschalters 2 wird der Pulsstromrichter 8 freigegeben. Die Erkennung des Einschaltvorganges des Leistungsschalters 2 kann beispielsweise durch Rückmeldung vom Leistungsschalter 2 selbst erfolgen oder alternativ durch Auftreten eines Netzstromes i_{N} mit Hilfe des Stromwandlers 7 detektiert werden.

Durch Einbeziehung des mittels des Stromwandlers 7 gemessenen Netzstromes i_{N} als Stromrichterregelgröße wird es ermöglicht, die durch den Einschalt-Rush auftretenden Gleichglieder (Gleichstromanteile) im Netzstrom i_{N} vom Pulsstromrichter 8 aus in wenigen Halbwellen der Netzspannung U_{N} abzubauen. Dies erfolgt durch Einprägen unterschiedlicher Spannungszeitflächen für die jeweilige Halbwelle der Netzspannung U_{N}. Der Zwischenkreiskondensator CD dient dabei zur Zwischenspeicherung der magnetischen Energie.

In einem dritten Schritt erfolgt zur Verhinderung unnötiger Leerlauf-Verluste die Stromrichtersperre nach Abbau des Gleichgliedes, wie vorstehend für das erste Verfahren erläutert.

Beim dritten Verfahren wird im Gegensatz zum ersten und zweiten Verfahren der Zwischenkreis 10 vor dem Einschalten des Leistungsschalters 2 nicht aufgeladen. Demzufolge ist die Vorladeeinrichtung 13 respektive 43 entbehrlich. Die Aufladung des Zwischenkreises 10 erfolgt vielmehr von der Primärseite des Transformators 3 aus, wie aus der nachstehenden Erläuterung ersichtlich ist. Der Steuerungsablauf gemäß dem dritten Verfahren wird nach folgenden Schritten vorgenommen:

Nachdem der Schalter 9 geschlossen ist, wird in einem ersten Schritt der Leistungsschalter 2 geschlossen. Mit dem Einlegen des Leistungsschalters 2 beginnt unmittelbar die Aufladung des sekundärseitig angeschlossenen Zwischenkreises 10. Die Ladeschwingung zum Zwischenkreiskondensator CD erfolgt über die Transformatorstreuinduktivitäten, den Schalter 9 und die Rückleistungsdioden des Pulsstromrichters 8. Das Überschwingen der Netzspannung U_{N} wird durch die im Kreis vorhandenen (und nicht venneidbaren) ohmschen Widerstände sowie durch die Filterwirkung von Transformatorstreureaktanz, Zusatzinduktivität (falls vorhanden) und Zwischenkreiskondensator CD in vielen Fällen ausreichend gedämpft.

Sollte diese passive Maßnahme der Spannungsbegrenzung nicht ausreichen, so übernimmt der Überspannungsbegrenzungszweig 11 die überschüssige Energie und limitiert somit die überschwingende Zwischenkreisspannung U_{D} auf zulässige Werte. Durch die sekundärseitige Belastung während der Transformatoreinschaltung sind die auftretenden Gleichglieder niedriger als bei unbelasteter Sekundärwicklung, d. h. geöffnetem Schalter 9.

In einem zweiten Schritt wird nach ausreichender Ladung des Zwischenkreises 10 der Pulsstromrichter 8 zur Ausregelung von Gleichgliedern (Gleichstromanteile) analog dem vorstehend beschriebenen zweiten Schritt des zweiten Verfahrens freigegeben.

Der dritte Schritt ist analog dem vorstehend erläuterten dritten Schritt des zweiten Verfahrens.

### Bezugszeichenliste

- 1: einphasiges Wechselspannungsnetz
- 2: Leistungsschalter
- 3: Transformator
- 4: Primärwicklung
- 5.1: erste Sekundärwicklung
- 5.n: n-te Sekundärwicklung
- 6: Spannungswandler
- 7: Stromwandler
- 8: selbstgeführter Pulsstromrichter
- 9: Schalter
- 10: Zwischenkreis
- 11: Überspannungsbegrenzungszweig
- 12: Stromwandler
- 13: Vorladeeinrichtung (DC/DC-Wandler)
- 14: Entkopplungsdiode
- 15: Schalter
- 16: Gleichspannungsquelle, Batterie
- 17: dreiphasiges Wechselspannungsnetz
- 18: Leistungsschalter
- 19: Leistungsschalter
- 20: Leistungsschalter
- 21: Transformator
- 22: Primärwicklung
- 23: Primärwicklung
- 24: Primärwicklung
- 25: Sekundärwicklung
- 26: Sekundärwicklung
- 27: Sekundärwicklung
- 28: Spannungswandler
- 29: Spannungswandler
- 30: Stromwandler
- 31: Stromwandler
- 32: Stromwandler
- 33: selbstgeführter Pulsstromrichter
- 34: Schalter
- 35: Schalter
- 36: Schalter
- 37: Zwischenkreis
- 38: Überspannungsbegrenzungszweig
- 39: Wechselrichter
- 40: Stromwandler
- 41: Stromwandler
- 42: Stromwandler
- 43: Vorladeeinrichtung (Anpaßtransformator + Diodenbrücke)
- 44: Schalter
- 45: Wechselspannungsquelle

- T11, T21, T31: Hauptventile
- T12, T22, T32: Hauptventile
- D11, D21, D31: Rückleistungsdioden
- D12, D22, D32: Rückleistungsdioden
- CD: Zwischenkreiskondensator
- R_{UB}: Widerstand
- T_{UB}: steuerbares Ventil

- i_{N}: Netzstom
- i₁, i₂, i₃: Pulsstromrichtereingangsströme
- U_{N}, U_{R}, U_{S}, U_{T}: Netzspannungen
- U_{D}: Zwischenkreisspannung

## Patentansprüche

1. Verfahren zum Zuschalten eines Transformators an ein Wechselspannungsnetz, wobei mindestens eine Primärwicklung (4, 22, 23, 24) des Transformators (3, 21) über einen Leistungsschalter (2,18,19, 20) mit dem Wechselspannungsnetz (1, 17) verbunden und ein für Vierquadrantenbetrieb geeigneter Pulsstromrichter (8, 33) an mindestens eine Sekundärwicklung (5.1, 25, 26, 27) des Transformators angeschlossen werden kann, **dadurch gekennzeichnet, daß** mittels des Pulsstromrichters (8, 33) unter Zuhilfenahme von Systemgrößen, wie Netzspannung (U_{N}, U_{R}, U_{S}, U_{T}), Netzstrom (i_{N}) und Pulsstromrichtereingangsstrom (i₁, i₂, i₃), eine geregelte oder gesteuerte netzsynchrone Transformatormagnetisierung durchgeführt wird.

2. Verfahren nach Anspruch 1, **dadurch gekennzeichnet, daß** die vom Pulsstromrichter (8, 33) durchgeführte Transformatormagnetisierung bereits vor der Verbindung des Transformators (3, 21) mit dem Wechselspannungsnetz (1, 17) erfolgt.

3. Verfahren nach Anspruch 1, **dadurch gekennzeichnet, daß** die vom Pulsstromrichter (8, 33) durchgeführte Transformatormagnetisierung erst nach der Verbindung des Transformators (3, 21) mit dem Wechselspannungsnetz (1, 17) erfolgt.

4. Verfahren nach Anspruch 2, **dadurch gekennzeichnet, daß** die Aufladung des Zwischenkreises (10, 37) bereits vor der Verbindung des Transformators (3, 21) mit dem Wechselspannungsnetz (1, 17) unter Zuhilfenahme einer Vorladeeinrichtung (13, 43) erfolgt.

5. Verfahren nach Anspruch 3, **dadurch gekennzeichnet, daß** die Aufladung des Zwischenkreises (10, 37) unmittelbar durch die Verbindung des Transformators (3, 21) mit dem Wechselspannungsnetz (1, 17) erfolgt, wobei sich ein Aufladeschwingvorgang über die Transformatorstreuinduktivität, die Rückleistungsdioden des Pulsstromrichters (8, 33) und den Zwischenkreiskondensator (CD) einstellt.

6. Verfahren nach Anspruch 3, **dadurch gekennzeichnet, daß** der Pulsstromrichter (8, 33) ein sich nach der Verbindung des Transformators (3, 21) mit dem Wechselspannungsnetz (1, 17) einstellendes Gleichglied im Netzstrom (i_{N}) durch geregelte Einprägung unterschiedlicher Spannungszeitflächen für die jeweilige Netzhalbwelle innerhalb weniger Halbwellen zu Null regelt.

7. Schaltungsanordnung zur Durchführung des Verfahrens zum Zuschalten eines Transformators an ein Wechselspannungsnetz nach Anspruch 1, wobei mindestens eine Primärwicklung (4, 22, 23, 24) des Transformators (3, 21) über einen Leistungsschalter (2,18, 19 20) mit dem Wechselspannungsnetz (1, 17) verbindbar und ein für Vierquadrantenbetrieb geeigneter Pulsstromrichter (8,33) an mindestens eine Sekundärwicklung (5.1, 25, 26, 27) des Transformators anschließbar ist, **gekennzeichnet durch** eine mit dem Zwischenkreis (10, 37) des Pulsstromrichters (8, 33) verbundene, als DC/DC-Wandler ausgebildete Vorladeeinrichtung (13).

8. Schaltungsanordnung zur Durchführung des Verfahrens zum Zuschalten eines Transformators an ein Wechselspannungsnetz nach Anspruch 1, wobei mindestens eine . Primärwicklung (4, 22, 23, 24) des Transformators-(3, 21) über einen Leistungsschalter (2, 18, 19 20) mit dem Wechselspannungsnetz (1,17) verbindbar und ein für Vierquadrantenbetrieb geeigneter Pulsstromrichter (8, 33) an mindestens eine Sekundärwicklung (5.1, 25, 26, 27) des Transformators anschließbar ist, **gekennzeichnet durch** eine mit dem Zwischenkreis (10, 37) des Pulsstromrichters (8, 33) verbundene, einen Anpaßtransformator und eine Diodenbrücke aufweisende Vorladeeinrichtung (43).

## Revendications

1. Procédé de branchement d'un transformateur sur un réseau à tension alternative, selon lequel au moins un enroulement primaire (4, 22, 23, 24) du transformateur (3, 21) est connecté par l'intermédiaire d'un disjoncteur (2, 18, 19, 20) au réseau à tension alternative (1, 17), et un convertisseur de courant pulsé (8, 33) approprié pour le fonctionnement à quatre quadrants peut être relié à au moins un enroulement secondaire (5.1, 25, 26, 27) du transformateur, **caractérisé en ce que**, grâce au convertisseur de courant pulsé (8, 33), à l'aide de grandeurs du système, telles que la tension du réseau (U_{N}, U_{R}, U_{S}, U_{T}), l'intensité du réseau (i_{N}) et l'intensité d'entrée du convertisseur de courant pulsé (i₁, i₂, i₃), on réalise une magnétisation du transformateur réglée ou commandée, de manière synchrone avec le réseau.

2. Procédé selon la revendication 1, **caractérisé en ce que** la magnétisation du transformateur réalisée par le convertisseur de courant pulsé (8, 33) se produit déjà avant la connexion du transformateur (3, 21) au réseau à tension alternative (1, 17).

3. Procédé selon la revendication 1, **caractérisé en ce que** la magnétisation du transformateur réalisée par le convertisseur de courant pulsé (8, 33) se produit seulement après la connexion du transformateur (3, 21) au réseau à tension alternative (1, 17).

4. Procédé selon la revendication 2, **caractérisé en ce que** le chargement du circuit intermédiaire (10, 37) se produit déjà avant la connexion du transformateur (3, 21) avec le réseau à tension alternative (1, 17) à l'aide d'un dispositif de préchargement (13, 43).

5. Procédé selon la revendication 3, **caractérisé en ce que** le chargement du circuit intermédiaire (10, 37) se produit directement par la connexion du transformateur (3, 21) avec le réseau à tension alternative (1 , 17), un processus de cycle de chargement débutant par l'intermédiaire de l'inductance de fuite du transformateur, des diodes de retour de puissance du convertisseur de courant pulsé (8, 33) et du condensateur du circuit intermédiaire (CD).

6. Procédé selon la revendication 3, **caractérisé en ce que** le convertisseur de courant pulsé (8, 33) règle à une valeur nulle un élément d'équilibrage dans le courant du réseau (i_{N}) s'ajustant après la connexion du transformateur (3, 21) avec le réseau à tension alternative (1, 17) en imprimant de manière régulée différents créneaux temporels de tension pour la demi-onde de réseau respective à l'intérieur de quelques demi-ondes.

7. Dispositif de branchement permettant de mettre en oeuvre le procédé de branchement d'un transformateur sur un réseau à tension alternative selon la revendication 1, dans lequel au moins un enroulement primaire (4, 22, 23, 24) du transformateur (3, 21) peut être connecté par l'intermédiaire d'un disjoncteur (2, 18, 19, 20) au réseau à tension alternative (1, 17), et un convertisseur de courant pulsé (8, 33) approprié pour le fonctionnement à quatre quadrants peut être relié à au moins un enroulement secondaire (5 .1, 25, 26, 27) du transformateur, **caractérisé par** un dispositif de préchargement (13) connecté au circuit intermédiaire (10, 37) du convertisseur de courant pulsé (8, 33), configuré sous la forme d'un convertisseur CC/CC.

8. Dispositif de branchement permettant de mettre en oeuvre le procédé de branchement d'un transformateur sur un réseau à tension alternative selon la revendication 1, dans lequel au moins un enroulement primaire (4, 22, 23, 24) du transformateur (3, 21) peut être connecté par l'intermédiaire d'un disjoncteur (2, 18, 19, 20) au réseau à tension alternative (1, 17), et un convertisseur de courant pulsé (8, 33) approprié pour le fonctionnement à quatre quadrants peut être relié à au moins un enroulement secondaire (5.1, 25, 26, 27) du transformateur, **caractérisé par** un dispositif de préchargement (43) connecté au circuit intermédiaire (10, 37) du convertisseur de courant pulsé (8, 33), présentant un transformateur d'adaptation et un pont de diodes.

## Claims

1. Method for connecting a transformer to an AC voltage network, wherein at least one primary winding (4, 22, 23, 24) of the transformer (3, 21) can be connected to the AC voltage network (1, 17) via a power switch (2, 18, 19, 20) and a pulse current converter (8, 33) suitable for four quadrant operation can be connected to at least one secondary winding (5.1, 25, 26, 27) of the transformer, **characterized in that** a regulated or controlled, network-synchronous transformer magnetization is performed by means of the pulse current converter (8, 33) with the aid of system parameters such as network voltage (U_{N}, U_{R}, U_{S}, U_{T}), network current (i_{N}) and pulse current converter input current (i₁, i₂, i₃).

2. Method according to Claim 1, **characterized in that** the transformer magnetization performed by the pulse current converter (8, 33) takes place already prior to connection of the transformer (3, 21) to the AC voltage network (1, 17).

3. Method according to Claim 1, **characterized in that** the transformer magnetization performed by the pulse current converter (8, 33) takes place only after connection of the transformer (3, 21) to the AC voltage network (1, 17).

4. Method according to Claim 2, **characterized in that** the charging of the intermediate circuit (10, 37) takes place already prior to connection of the transformer (3, 21) to the AC voltage network (1, 17) with the aid of a precharging device (13, 43).

5. Method according to Claim 3, **characterized in that** the charging of the intermediate circuit (10, 37) takes place directly by the connection of the transformer (3, 21) to the AC voltage network (1, 17), wherein a charge oscillation operation is started via the transformer leakage inductance, the reverse diodes of the pulse current converter (8, 33) and the intermediate circuit capacitor (CD).

6. Method according to Claim 3, **characterized in that** the pulse current converter (8, 33) regulates to zero an equilibrium component in the network current (i_{N}) which is set after connection of the transformer (3, 21) to the AC voltage network, by impressing thereon in a regulated manner different voltage time integrals for the respective network half-wave within a few half-waves.

7. Circuit arrangement for carrying out the method for connecting a transformer to an AC voltage network according to Claim 1, wherein at least one primary winding (4, 22, 23, 24) of the transformer (3, 21) can be connected to the AC voltage network (1, 17) via a power switch (2, 18, 19, 20), and a pulse current converter (8, 33) suitable for four quadrant operation can be connected to at least one secondary winding (5.1, 25, 26, 27) of the transformer, **characterized by** a precharging device (13) which is connected to the intermediate circuit (10, 37) of the pulse current converter (8, 33) and is designed as a DC/DC converter.

8. Circuit arrangement for carrying out the method for connecting a transformer to an AC voltage network according to Claim 1, wherein at least one primary winding (4, 22, 23, 24) of the transformer (3, 21) can be connected to the AC voltage network (1, 17) via a power switch (2, 18, 19, 20), and a pulse current converter (8, 33) suitable for four quadrant operation can be connected to at least one secondary winding (5.1, 25, 26, 27) of the transformer, **characterized by** a precharging device (43) which is connected to the intermediate circuit (10, 37) of the pulse current converter (8, 33) and has a matching transformer and a diode bridge.
